# EUROPEAN PATENT APPLICATION

(11) **EP 4 749 153 A1**
(43) Date of publication of application: **27.05.2026**
(21) Application number: 24853283.0
(22) Date of filing: 20.05.2024
(51) Int. Cl.: F16D 65/092, F16D 65/095, F16D 65/18, F16D 55/225

(54) **ELECTRO-MECHANICAL BRAKE OF SPLIT TYPE CALIPER BODY AND VEHICLE**

(30) Priority: 14.08.2023 CN 202311022175
(71) Applicant: Huawei Digital Power Technologies Co., Ltd., Shenzhen, Guangdong 518043 (CN)
(72) Inventor: LUO, Yuehao, Shenzhen, Guangdong 518043 (CN); HE, Yuhui, Shenzhen, Guangdong 518043 (CN); NI, Hui, Shenzhen, Guangdong 518043 (CN)
(74) Representative: Maiwald GmbH
(86) International application number: PCT/CN2024/094106
(87) International publication number: WO 2025/035868

(57) **Abstract**

This application provides an electro-mechanical brake apparatus with a split-type caliper body and a vehicle. The electro-mechanical brake apparatus includes an actuator and a brake. The actuator includes a brake motor and a reducer. The brake includes the caliper body and a transmission assembly. The brake motor is configured to drive the transmission assembly via the reducer. The transmission assembly is configured to drive a friction pad. The caliper body includes a body and an end cover. The body includes an accommodating cavity, the accommodating cavity is configured to accommodate the transmission assembly, and the end cover is configured to shield the accommodating cavity. Along an axial direction of the brake motor, a transmission member between the reducer and the transmission assembly passes through the end cover, and the brake motor, the end cover, and the transmission assembly are arranged on a same side of the reducer. In this application, in the electro-mechanical brake apparatus, the caliper body is split into the end cover and the body, thereby simplifying processing difficulty of the caliper body and ensuring overall precision and rigid strength.

## Description

### CROSS-REFERENCE TO RELATED APPLICATIONS

This application claims priority to Chinese Patent Application No. 202311022175.8, filed with the China National Intellectual Property Administration on August 14, 2023 and entitled "ELECTRO-MECHANICAL BRAKE APPARATUS WITH SPLIT-TYPE CALIPER BODY AND VEHICLE", which is incorporated herein by reference in its entirety.

### TECHNICAL FIELD

This application relates to the field of vehicle technologies, and specifically, to an electro-mechanical brake apparatus with a split-type caliper body and a vehicle.

### BACKGROUND

An electro-mechanical brake (electro-mechanical brake, EMB) apparatus uses a motor and a mechanical transmission mechanism to drive a brake to implement braking. The electro-mechanical brake apparatus features a simple structure, sensitive response, a stable load transfer, no need to dispose hydraulic pipe, and the like, and has high transmission efficiency. The electro-mechanical brake apparatus can improve safety, maneuverability, and comfort of a vehicle.

As a main force-bearing component of the electro-mechanical brake apparatus, a caliper body needs to be used to fasten the brake motor and the mechanical transmission mechanism, and further needs to be connected to a brake friction pad. A structure of the caliper body is complex, and a precision requirement is high. As a result, processing is difficult, and costs are high.

### SUMMARY

According to a first aspect, this application provides an electro-mechanical brake apparatus with a split-type caliper body, including an actuator and a brake. The actuator includes a brake motor and a reducer. The brake includes a transmission assembly and the split-type caliper body. The brake motor is configured to drive the transmission assembly via the reducer. The transmission assembly is configured to drive a friction pad. The caliper body includes a body and an end cover, and the end cover is detachably connected to the body. The body includes an accommodating cavity, the accommodating cavity is configured to accommodate the transmission assembly, and the end cover is configured to shield the accommodating cavity. Along an axial direction of the brake motor, a transmission member between the reducer and the transmission assembly passes through the end cover, and the brake motor, the end cover, and the transmission assembly are arranged on a same side of the reducer.

In this application, in the electro-mechanical brake apparatus, the caliper body is split into two parts: the body and the end cover, and a structure of the caliper body is formed through combination and assembly. The accommodating cavity configured to accommodate the transmission assembly may be processed from a side of the end cover of the body. This helps reduce processing difficulty of the body and improve processing precision. In addition, the transmission assembly may be installed from a side that is of the body and that is away from the friction pad, and there is no need to reserve an assembly avoidance position for the transmission assembly on a side that is of the body and that is close to the friction pad, thereby facilitating assembly of the body. Overall rigid strength of the caliper body can also be ensured by configuring a connecting member of the end cover.

In an embodiment, the end cover is provided with a through hole that penetrates along the axial direction of the brake motor, and the through hole is configured to avoid the transmission member between the reducer and the transmission assembly.

In this application, an input shaft and an output shaft of the reducer are spaced apart along a direction in which the brake motor and the transmission assembly of the brake are arranged. The input shaft and a motor shaft of the brake motor are coaxially driven. The output shaft passes through the end cover, and is coaxially driven with the transmission assembly of the brake. An overall volume of the reducer can be compressed, and this is beneficial to miniaturization of the electro-mechanical brake apparatus.

In an embodiment, the end cover includes an extend-in section. Along the axial direction of the brake motor, the extend-in section is accommodated in the accommodating cavity, and an end face of the extend-in section is configured to limit a sliding distance that is of the transmission assembly in the accommodating cavity and that faces the end cover.

In this application, the extend-in section may be configured to assist in reliable radial positioning between the end cover and the body, and increase a contact surface between the end cover and the body to improve sealing effect. The extend-in section may be further configured to limit the sliding distance of the transmission assembly facing the end cover.

In an embodiment, the brake includes a pressure sensor, and the pressure sensor is configured to detect pressure applied to the end cover by the transmission assembly. Along the axial direction of the brake motor, the pressure sensor is located between the transmission assembly and the end cover, and a surface that is of the end cover and that faces the accommodating cavity is provided with a step hole for accommodating and fastening the pressure sensor.

In this application, the pressure sensor is disposed on a side that is of the transmission assembly and that is close to the end cover, and the pressure sensor is accommodated and fastened via the step hole in the end cover. This simplifies an installation structure while implementing pressure detection, and properly utilizes internal space of the caliper body.

In an embodiment, the end cover includes a first mounting face and a second mounting face that face away from each other along the axial direction of the brake motor. The second mounting face faces the reducer, the second mounting face is provided with a third recess, the third recess is configured to avoid a signal transmission line of the pressure sensor, and the third recess extends along a radial direction of the brake motor.

In this application, the pressure sensor is led out from the mounting face between the housing of the actuator and the end cover, so that a tracing length of the transmission line inside the electro-mechanical brake apparatus can be shortened, and an overall volume of the electro-mechanical brake apparatus can be compressed.

In an embodiment, the first mounting face includes a first recess and a first sealing member, and the first sealing member is embedded into the first recess to implement sealing between the end cover and the body of the caliper body. Alternatively, a second recess and a second sealing member that cooperate with each other are disposed between the second mounting face and a housing of the actuator, and the second sealing member is embedded into the second recess to implement sealing between the end cover and the housing of the actuator.

In this application, the two mounting faces, of the end cover, that face away from each other are respectively connected to the body and the housing of the actuator in a sealed manner, so that sealing protection can be implemented inside the caliper body and between the caliper body and the actuator.

In an embodiment, the body includes a recess, and the recess is configured to accommodate the brake motor. Along the axial direction of the brake motor, a recess direction of the recess is away from the reducer. Along the radial direction of the brake motor, the recess direction of the recess faces the transmission assembly.

In this application, a motor accommodating cavity configured to accommodate the brake motor is disposed in the caliper body, and the brake motor is biased relative to the end cover, so that the overall volume of the electro-mechanical brake apparatus can be compressed, and wheel space can be saved. In an embodiment, along the axial direction of the brake motor, the brake motor and the transmission assembly are arranged on the same side of the reducer.

In this application, the brake motor, the reducer, and the transmission assembly of the brake are arranged to form a U-shaped structure, and a driving force provided by the brake motor may be transferred to the transmission assembly of the brake through a shorter transmission path, and the overall volume of the electro-mechanical brake apparatus is compressed.

In an embodiment, the body includes two sliding connection holes, and the two sliding connection holes are configured to slidably connect to a caliper frame. Along the radial direction of the brake motor, the two sliding connection holes are respectively arranged on two sides of the end cover. Along an arrangement direction of the two sliding connection holes, projection of the brake motor covers projection of the two sliding connection holes.

In an embodiment, the body includes two fixed connection holes, and the two fixed connection holes are configured to fasten the end cover to the reducer. Along the radial direction of the brake motor, the two fixed connection holes are respectively arranged on the two sides of the end cover. Along the arrangement direction of the two fixed connection holes, the projection of the brake motor does not cover projection of any one of the fixed connection holes.

In this application, the caliper body is arranged in different directions relative to the sliding connection hole of a vehicle frame and the fixed connection hole of the caliper body for fastening the reducer, to separately facilitate assembly and connection of the caliper body and the vehicle frame and assembly and connection of the caliper body and the reducer. The brake motor, the reducer, and the transmission assembly of the brake are arranged to form a U-shaped structure, and a driving force provided by the brake motor may be transferred to the transmission assembly of the brake through a shorter transmission path, and the overall volume of the electro-mechanical brake apparatus is compressed.

According to a second aspect, this application provides an electro-mechanical brake apparatus, including an actuator and a brake. The actuator includes a brake motor and a reducer. The brake includes a caliper body and a transmission assembly. The brake motor is configured to drive the transmission assembly via the reducer. The transmission assembly is configured to drive a friction pad. A body of the caliper body includes a recess configured to accommodate the brake motor. Along an axial direction of the brake motor, a recess direction of the recess is away from the reducer. Along a radial direction of the brake motor, the recess direction of the recess faces the transmission assembly.

In this application, the brake motor, the reducer, and the transmission assembly of the brake are arranged to form a U-shaped structure, and a driving force provided by the brake motor may be transferred to the transmission assembly of the brake through a shorter transmission path, and an overall volume of the electro-mechanical brake apparatus is compressed.

In an embodiment, the caliper body includes an end cover and the body, the end cover is detachably connected to the body, the body includes an accommodating cavity, the accommodating cavity is configured to accommodate the transmission assembly, and the end cover is configured to shield the accommodating cavity. Along the axial direction of the brake motor, a transmission member between the reducer and the transmission assembly passes through the end cover, and the brake motor, the end cover, and the transmission assembly are arranged on a same side of the reducer.

In this application, the caliper body is split into two parts: the body and the end cover, and a structure of the caliper body is formed through combination and assembly. The accommodating cavity configured to accommodate the transmission assembly may be processed from a side of the end cover of the body. This helps reduce processing difficulty of the body and improve processing precision. In addition, the transmission assembly may be installed from a side that is of the body and that is away from the friction pad, and there is no need to reserve an assembly avoidance position for the transmission assembly on a side that is of the body and that is close to the friction pad, thereby facilitating assembly of the body. Overall rigid strength of the caliper body can also be ensured by configuring a connecting member of the end cover.

In an embodiment, the body includes two sliding connection holes and two fixed connection holes, the two sliding connection holes are configured to slidably connect to a caliper frame, and the two fixed connection holes are configured to fasten the body to the end cover. Along the radial direction of the brake motor, the two sliding connection holes are respectively arranged on two sides of the end cover, and the two fixed connection holes are respectively arranged on the two sides of the end cover. Along an arrangement direction of the two sliding connection holes, projection of the brake motor covers projection of the two sliding connection holes.

In an embodiment, an arrangement direction of the two fixed connection holes intersects the arrangement direction of the two sliding connection holes. Along the arrangement direction of the two fixed connection holes, the projection of the brake motor does not cover projection of any one of the fixed connection holes.

In this application, the caliper body is arranged in different directions relative to the sliding connection hole of a vehicle frame and the fixed connection hole of the caliper body for fastening the reducer, to separately facilitate assembly and connection of the caliper body and the vehicle frame and assembly and connection of the caliper body and the reducer. The brake motor, the reducer, and the transmission assembly of the brake are arranged to form a U-shaped structure, and a driving force provided by the brake motor may be transferred to the transmission assembly of the brake through a shorter transmission path, and an overall volume of the electro-mechanical brake apparatus is compressed.

According to a third aspect, this application provides a vehicle, including a wheel and the electro-mechanical brake apparatus according to any one of the foregoing implementations of the first aspect or the second aspect. An axial direction of a brake motor is parallel to a rotation axis of the wheel.

The vehicle according to this application is braked via the electro-mechanical brake apparatus according to the first aspect or the second aspect of this application, and costs of the vehicle in this application are correspondingly reduced while braking effect is ensured.

### BRIEF DESCRIPTION OF DRAWINGS

FIG. 1 is a diagram of a working scenario of an electro-mechanical brake apparatus according to an embodiment of this application;
FIG. 2 is a diagram of an outline structure of an electro-mechanical brake apparatus according to an embodiment of this application;
FIG. 3 is a diagram of an outline structure of another side of an electro-mechanical brake apparatus according to an embodiment of this application;
FIG. 4 is a diagram of a cross-sectional structure of an electro-mechanical brake apparatus according to an embodiment of this application;
FIG. 5 is a diagram of an outline structure of an electro-mechanical brake apparatus according to an embodiment of this application;
FIG. 6 is a diagram of a cross-sectional structure of an electro-mechanical brake apparatus according to an embodiment of this application;
FIG. 7 is a diagram of an exploded structure of an electro-mechanical brake apparatus according to an embodiment of this application;
FIG. 8 is a diagram of an outline structure of a body of a caliper body in an electro-mechanical brake apparatus according to an embodiment of this application;
FIG. 9 is a diagram of a cross-sectional structure of a partial structure of an electro-mechanical brake apparatus according to an embodiment of this application;
FIG. 10 is a diagram of an exploded structure of a caliper body in an electro-mechanical brake apparatus according to an embodiment of this application;
FIG. 11 is a diagram of a cross-sectional structure of a partial structure of an electro-mechanical brake apparatus according to an embodiment of this application;
FIG. 12 is a diagram of a cross-sectional structure of a partial structure of an electro-mechanical brake apparatus according to an embodiment of this application;
FIG. 13 is a diagram of an outline structure of an end cover of a caliper body in an electro-mechanical brake apparatus according to an embodiment of this application;
FIG. 14 is a diagram of a cross-sectional structure of an end cover of a caliper body in an electro-mechanical brake apparatus according to an embodiment of this application;
FIG. 15 is a diagram of an exploded structure of a partial structure of an electro-mechanical brake apparatus according to an embodiment of this application;
FIG. 16 is a diagram of a partial cross-sectional structure of the electro-mechanical brake apparatus at a position A according to the embodiment shown in FIG. 12 of this application; and
FIG. 17 is a schematic arrangement diagram of an internal structure of an electro-mechanical brake apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

Sequence numbers numbered for components in this specification, for example, "first" and "second", are merely used to distinguish between described objects, and do not have any sequence or technical meaning. Unless otherwise specified, a "connection" in this application includes a direct connection and an indirect connection. In the descriptions of this application, it should be understood that orientations or position relationships indicated by terms "above", "below", "front", "back", "top", "bottom", "inside", "outside", and the like are based on orientations or position relationships shown in the accompanying drawings. This is merely intended to facilitate description of this application and simplify the description, but is not intended to indicate or imply that the referred apparatus or element needs to have a specific orientation, and to be constructed and operated in a specific orientation. Therefore, this cannot be construed as a limitation on this application.

In this application, unless otherwise specified and limited, that a first feature is "above" or "below" a second feature may be that the first feature is in direct contact with the second feature, or the first feature is in indirect contact with the second feature via an intermediate medium. In addition, that the first feature is "on the top of" and "above" the second feature may be that the first feature is right above or obliquely above the second feature. Alternatively, this only indicates that a horizontal height of the first feature is higher than a horizontal height of the second feature. That the first feature is "under" and "below" the second feature may be that the first feature is right below or obliquely below the second feature. Alternatively, this only indicates that the horizontal height of the first feature is lower than the horizontal height of the second feature.

The application provides an electro-mechanical brake apparatus with a split-type caliper body. The electro-mechanical brake apparatus includes an actuator and a brake. The actuator includes a brake motor and a reducer. The brake includes a transmission assembly and the split-type caliper body. The brake motor is configured to drive the transmission assembly via the reducer. The transmission assembly is configured to drive a friction pad. The caliper body includes a body and an end cover, and the end cover is detachably connected to the body. The body includes an accommodating cavity, the accommodating cavity is configured to accommodate the transmission assembly, and the end cover is configured to shield the accommodating cavity. Along an axial direction of the brake motor, a transmission member between the reducer and the transmission assembly passes through the end cover, and the brake motor, the end cover, and the transmission assembly are arranged on a same side of the reducer.

In this application, in the electro-mechanical brake apparatus, the caliper body is split into two parts: the body and the end cover, and a structure of the caliper body is formed through combination and assembly. The accommodating cavity configured to accommodate the transmission assembly may be processed from a side of the end cover of the body. This helps reduce processing difficulty of the body and improve processing precision. In addition, the transmission assembly may be installed from a side that is of the body and that is away from the friction pad, and there is no need to reserve an assembly avoidance position for the transmission assembly on a side that is of the body and that is close to the friction pad, thereby facilitating assembly of the body. Overall rigid strength of the caliper body can also be ensured by configuring a connecting member of the end cover.

The application provides an electro-mechanical brake apparatus, including an actuator and a brake. The actuator includes a brake motor and a reducer. The brake includes a caliper body and a transmission assembly. The brake motor is configured to drive the transmission assembly via the reducer. The transmission assembly is configured to drive a friction pad. A body of the caliper body includes a recess configured to accommodate the brake motor. Along an axial direction of the brake motor, a recess direction of the recess is away from the reducer. Along a radial direction of the brake motor, the recess direction of the recess faces the transmission assembly.

In this application, the brake motor, the reducer, and the transmission assembly of the brake are arranged to form a U-shaped structure, and a driving force provided by the brake motor may be transferred to the transmission assembly of the brake through a shorter transmission path, and an overall volume of the electro-mechanical brake apparatus is compressed.

This application provides a vehicle, including a wheel and the foregoing electro-mechanical brake apparatus. An arrangement direction of two friction pads of a brake in the electro-mechanical brake apparatus is parallel to a rotation axis of a brake disc of the wheel. Costs of the vehicle in this application are correspondingly reduced while braking effect is ensured.

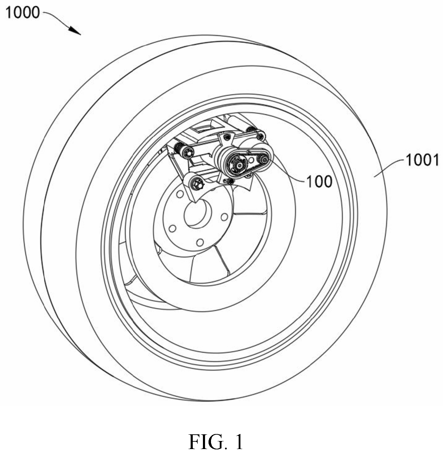

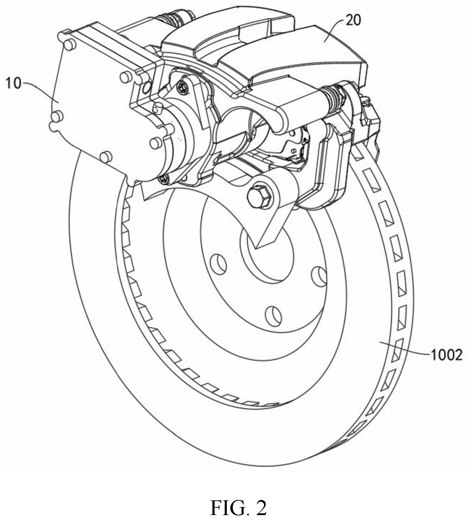

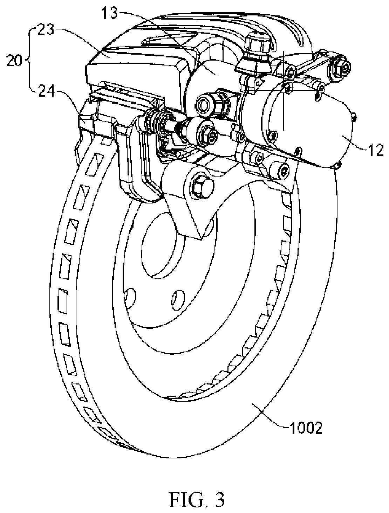

Refer to FIG. 1 to FIG. 3. FIG. 1 is a diagram of a working scenario of an electro-mechanical brake apparatus 100 according to an embodiment of this application, FIG. 2 is a diagram of an outline structure of the electro-mechanical brake apparatus 100 according to an embodiment of this application, and FIG. 3 is a diagram of an outline structure of another side of the electro-mechanical brake apparatus 100 according to an embodiment of this application. To clearly show an internal functional structure of the electro-mechanical brake apparatus 100, a partial structure like a housing in the electro-mechanical brake apparatus 100 is hidden in FIG. 1, and only a partial structure at a position of a wheel 1001 of a vehicle 1000 is shown in FIG. 1 to FIG. 3.

As shown in FIG. 1 to FIG. 3, the vehicle 1000 according to an embodiment of this application includes the wheel 1001 and the electro-mechanical brake apparatus 100. The electro-mechanical brake apparatus 100 is fixedly disposed on a vehicle frame of the vehicle 1000, and is disposed at the position corresponding to the wheel 1001. The electro-mechanical brake apparatus 100 is configured to brake the wheel 1001.

In an embodiment, a brake disc 1002 is coaxially fastened to the wheel 1001, and the brake disc 1002 rotates synchronously with the wheel 1001 when the vehicle 1000 travels. The electro-mechanical brake apparatus 100 is fastened to the vehicle frame (not shown in the figure), and the electro-mechanical brake apparatus 100 is disposed corresponding to the brake disc 1002. The electro-mechanical brake apparatus 100 generates a friction force through contact with the brake disc 1002 to brake the brake disc 1002, and indirectly brakes the wheel 1001.

It should be noted that, in the embodiment shown in FIG. 1, only one wheel 1001 and one electro-mechanical brake apparatus 100 are used as an example for description. In an actual application scenario, the electro-mechanical brake apparatus 100 may be correspondingly disposed on some wheels or each wheel 1001 of the vehicle 1000.

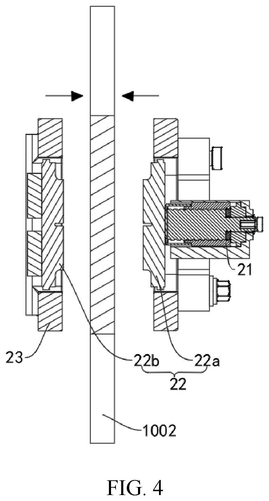

Refer to FIG. 4 with reference to FIG. 2 and FIG. 3. FIG. 4 is a diagram of a cross-sectional structure of the electro-mechanical brake apparatus 100 according to an embodiment of this application. As shown in FIG. 2 to FIG. 4, the electro-mechanical brake apparatus 100 includes an actuator 10 and a brake 20. The actuator 10 is configured to provide a driving force for the brake 20. The brake 20 is configured to: after receiving power, generate an internal mechanism action to brake the brake disc 1002, to indirectly brake the wheel 1001, thereby implementing a braking function of the vehicle 1000.

In an embodiment, the actuator 10 drives a transmission assembly 21 to move, and transmits the power to a friction pad 22 via the transmission assembly 21. The transmission assembly 21 is configured to push the friction pad 22 adjacent to the transmission assembly 21 to slide towards the brake disc 1002 to brake the wheel 1001.

In this specification of this application, an example in which two friction pads 22 are a first friction pad 22a and a second friction pad 22b is used for description.

In an embodiment, the actuator 10 includes a reducer 12 and a brake motor 13. The brake 20 includes a caliper body 23 and the transmission assembly 21. The brake motor 13 is configured to drive the transmission assembly 21 via the reducer 12. The transmission assembly 21 is configured to drive the friction pad 22.

In an embodiment, the brake includes the transmission assembly 21 and the split-type caliper body 23. The split-type caliper body 23 includes a body 231 and an end cover 232. The end cover 232 is detachably connected to the body 231. In an embodiment, an arrangement direction of the two friction pads 22 is parallel to an axial direction of the brake motor 13, and a radial direction of the brake motor 13 is perpendicular to the arrangement direction of the two friction pads 22.

In the illustrations of FIG. 2 to FIG. 4, the brake 20 includes the caliper body 23 and a caliper frame 24, and the transmission assembly 21 is accommodated in the caliper body 23. The caliper frame 24 is fastened to the vehicle frame of the vehicle 1000, the caliper body 23 is slidably connected to the caliper frame 24, and a sliding direction of the caliper body 23 towards the caliper frame 24 is parallel to an axial direction of the brake disc 1002 of the wheel 1001.

Along the axial direction of the brake disc 1002, the two friction pads 22 of the brake 20 are respectively arranged on two opposite sides of the brake disc 1002, that is, along a rotation axis of the brake disc 1002. The first friction pad 22a is located on a side that is of the brake disc 1002 and that is close to the transmission assembly 21. In addition, the first friction pad 22a is slidably connected to the caliper body 23. The second friction pad 22b is located on a side that is of the brake disc 1002 and that is away from the transmission assembly 21, and is fastened to the caliper body 23.

The actuator 10 drives the transmission assembly 21 to move towards the brake disc 1002 along the rotation axis of the brake disc 1002, so that the transmission assembly 21 synchronously drives the first friction pad 22a to slide towards the brake disc 1002.

In an embodiment, a sliding direction of the first friction pad 22a is parallel to the rotation axis of the brake disc 1002. The rotation axis of the brake disc 1002 is parallel to the axial direction of the brake motor 13.

After the transmission assembly 21 shifts and pushes the first friction pad 22a to move towards the brake disc 1002 until the first friction pad 22a abuts against the brake disc 1002, reverse thrust is generated on the first friction pad 22a along the rotation axis of the brake disc 1002, that is, reverse thrust applied by the brake disc 1002 to the first friction pad 22a. The transmission assembly 21 continues to shift under action of the thrust, and may drive the caliper body 23 to slide towards the caliper frame 24.

Because a direction of the reverse thrust applied by the brake disc 1002 to the first friction pad 22a is a direction along the rotation axis of the brake disc 1002 towards the transmission assembly 21, the caliper body 23 is driven to slide towards the transmission assembly 21 along the rotation axis of the brake disc 1002, and the second friction pad 22b fastened to the caliper body 23 is synchronously driven to slide along the rotation axis of the brake disc 1002 towards the transmission assembly 21. In this way, the transmission assembly 21 can drive the two friction pads 22 to be close to each other from two opposite sides of the brake disc 1002 (as shown by solid arrows in FIG. 4).

In other words, that the transmission assembly 21 drives the first friction pad 22a to shift towards the brake disc 1002 to brake the wheel 1001 may be understood as that the transmission assembly 21 drives the first friction pad 22a to slide towards the brake disc 1002, and drives, via the caliper body 23, the second friction pad 22b to slide synchronously towards the brake disc 1002, so that the two friction pads 22 slide in directions in which the two friction pads 22 are close to each other. To be specific, thrust generated when the actuator 10 drives the transmission assembly 21 to move may form, along a direction of the rotation axis of the brake disc 1002, thrust for sliding the friction pad 22 and thrust for sliding the caliper body 23 reversely, to further simultaneously drive the two friction pads 22 to be close to the brake disc 1002 towards each other.

When the two friction pads 22 are close to each other along the axial direction of the brake disc 1002 until the two friction pads 22 respectively abut against two opposite end faces of the brake disc 1002, a friction force is generated between the friction pads 22 and the brake disc 1002, to reduce a rotational speed of the brake disc 1002. Because the brake disc 1002 rotates synchronously with the wheel 1001, a decrease in the rotational speed of the brake disc 1002 reduces a rotational speed of the wheel 1001 synchronously, to brake the wheel 1001, and further implement a function of braking the vehicle 1000 by the electro-mechanical brake apparatus 100.

In addition, in this embodiment of this application, the two friction pads 22 are disposed to respectively abut against the two end faces of the brake disc 1002 that are opposite to each other along the axial direction of the brake disc 1002, to brake the brake disc 1002. Because areas of the friction pads 22 are large, when the friction pads 22 abut against the end faces of the brake disc 1002, there are large contact areas between the friction pads 22 and the brake disc 1002. This can form a large friction force between the brake disc 1002 and the friction pads 22, to ensure reliable braking on the wheel 1001.

It may be understood that a braking process of the electro-mechanical brake apparatus 100 may be as follows: When the actuator 10 drives the transmission assembly 21 to move along the rotation axis of the brake disc 1002 towards the brake disc 1002, the transmission assembly 21 generates the thrust and pushes the first friction pad 22a to slide towards the brake disc 1002, and synchronously pushes the caliper body 23 to slide towards the caliper frame 24, to drive the second friction pad 22b fastened to the caliper body 23 to slide towards the brake disc 1002. Both the first friction pad 22a and the second friction pad 22b are in contact with the brake disc 1002 to form friction. The first friction pad 22a and the second friction pad 22b cooperate to work to brake the brake disc 1002 by the electro-mechanical brake apparatus 100.

Because the caliper frame 24 is fastened to the vehicle frame of the vehicle 1000, when the transmission assembly 21 moves along the rotation axis of the brake disc 1002 in a direction close to the brake disc 1002, the caliper body 23 is synchronously driven to slide. In this case, a displacement direction of the transmission assembly 21 is parallel to the sliding direction of the caliper body 23 towards the caliper frame 24, that is, the displacement direction of the transmission assembly 21 is parallel to the rotation axis of the brake disc 1002. It may also be understood that the displacement direction of the transmission assembly 21 is parallel to a wheel shaft of the wheel 1001.

In an embodiment, the caliper body 23 includes the body 231 and the end cover 232. The body 231 includes an accommodating cavity 2314, and the accommodating cavity 2314 is configured to accommodate the transmission assembly 21. The end cover 232 is configured to shield the accommodating cavity 2314. Along the axial direction of the brake motor 13, a transmission member between the reducer 12 and the transmission assembly 21 passes through the end cover. The brake motor 13, the end cover 232, and the transmission assembly 21 are arranged on a same side of the reducer 12.

In an embodiment, the end cover 232 is provided with a through hole 2322 that penetrates along the axial direction of the brake motor 13, and the through hole 2322 is configured to avoid the transmission member between the reducer 12 and the transmission assembly 21. In this embodiment of this application, the transmission member between the reducer 12 and the transmission assembly 21 includes an output shaft of the reducer 12 or an input shaft of the transmission assembly 21.

In an embodiment, the end cover 232 includes an extend-in section 2321. Along the axial direction of the brake motor 13, the extend-in section 2321 is accommodated in the accommodating cavity 2314, and an end face of the extend-in section 2321 is configured to limit a sliding distance that is of the transmission assembly 21 in the accommodating cavity 2314 and that faces the end cover 232.

In an embodiment, the brake 20 includes a pressure sensor 26, and the pressure sensor 26 is configured to detect pressure applied to the end cover 232 by the transmission assembly 21. Along the axial direction of the brake motor 13, the pressure sensor 26 is located between the transmission assembly 21 and the end cover 232, and a surface that is of the end cover 232 and that faces the accommodating cavity 2314 is provided with a step hole 2325 for accommodating and fastening the pressure sensor 26.

In an embodiment, the end cover 232 includes a first mounting face 2323 and a second mounting face 2324 that face away from each other along the axial direction of the brake motor 13. The second mounting face 2324 faces the reducer 12, the second mounting face 2324 is provided with a third recess 2326, the third recess 2326 is configured to avoid a signal transmission line of the pressure sensor 26, and the third recess 2326 extends along the radial direction of the brake motor 13.

In an embodiment, the first mounting face 2323 includes a first recess 2323a and a first sealing member 28, and the first sealing member 28 is embedded into the first recess 2323a to implement sealing between the end cover and the body 231 of the caliper body 23. Alternatively, a second recess 2324a and a second sealing member 29 that cooperate with each other are disposed between the second mounting face 2324 and a housing of the actuator 10, and the second sealing member 29 is embedded into the second recess 2324a to implement sealing between the end cover and the housing of the actuator 10.

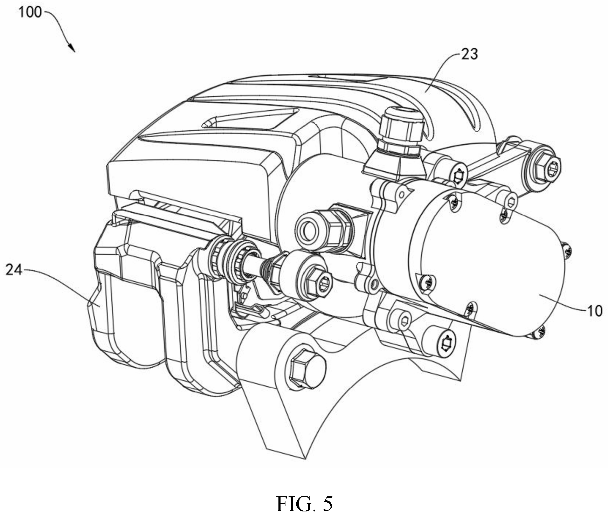

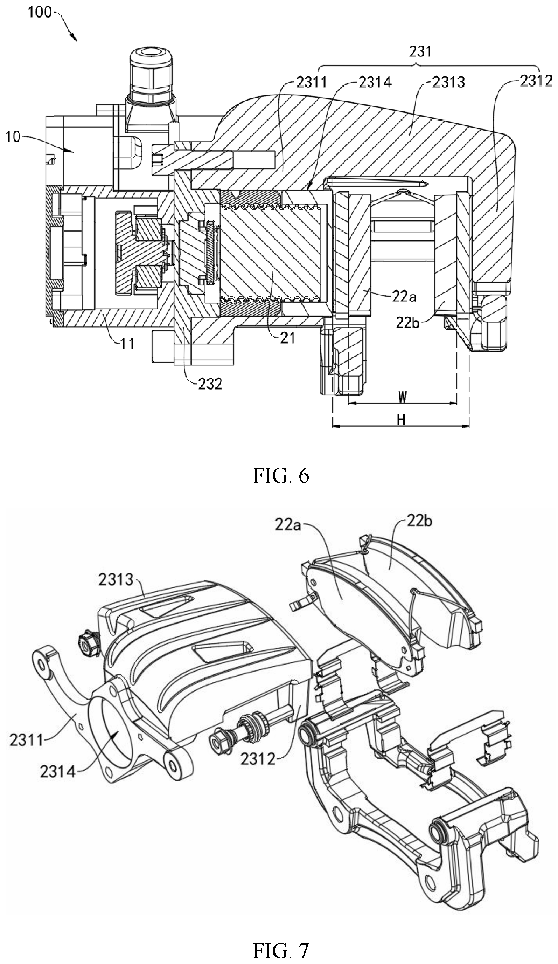

Refer to FIG. 5 to FIG. 7. FIG. 5 is a diagram of an outline structure of the electro-mechanical brake apparatus 100 according to an embodiment of this application, FIG. 6 is a diagram of a cross-sectional structure of the electro-mechanical brake apparatus 100 according to an embodiment of this application, and FIG. 7 is a diagram of an exploded structure of the electro-mechanical brake apparatus 100 according to an embodiment of this application.

The caliper body 23 includes the body 231 and the end cover 232 that are fastened. The transmission assembly 21 is accommodated in the body 231, and along the arrangement direction of the two friction pads 22, the actuator 10, the end cover 232, and the transmission assembly 21 are sequentially arranged on a same side of the two friction pads 22.

In the illustrations of FIG. 5 to FIG. 7, along the arrangement direction of the two friction pads 22, the end cover 232 is fastened to a side that is of the body 231 and that faces the actuator 10.

The transmission member between the actuator 10 and the brake 20 passes through the end cover 232 and extends into the body 231, to be in a transmission connection to the transmission assembly 21 accommodated in the body 231. In an embodiment, the transmission member between the actuator 10 and the brake 20 includes an output shaft of the actuator 10 or an input shaft of the brake 20.

The arrangement direction of the two friction pads 22 may be understood as that the two friction pads 22 are arranged at intervals along the rotation axis of the brake disc 1002, or may be understood as that the arrangement direction of the two friction pads 22 is parallel to the rotation axis of the brake disc 1002.

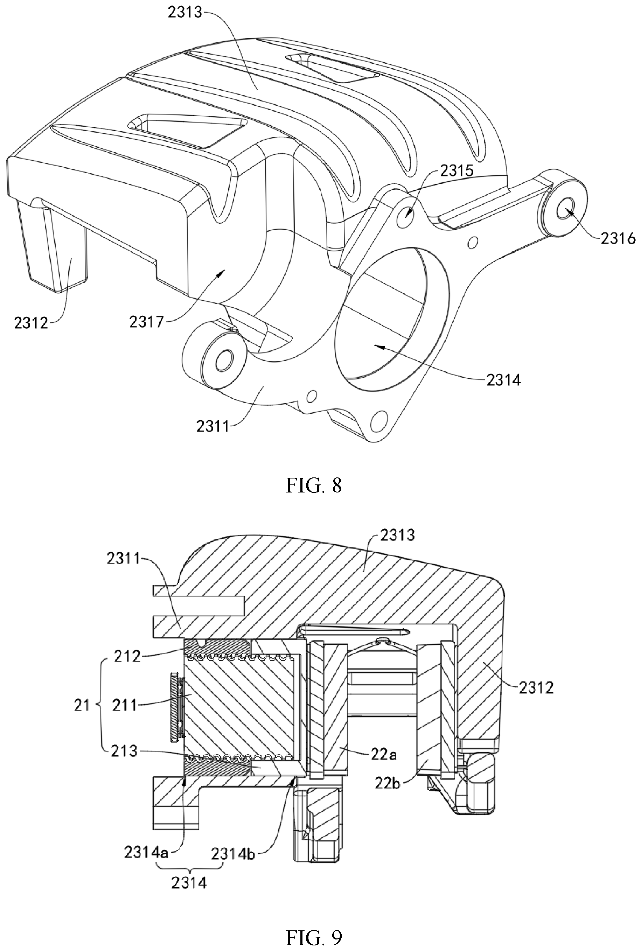

Refer to FIG. 8 with reference to FIG. 6 and FIG. 7. FIG. 8 is a diagram of an outline structure of the body 231 of the caliper body 23 in the electro-mechanical brake apparatus 100 according to an embodiment of this application. As shown in FIG. 6 to FIG. 8, the body 231 of the caliper body 23 includes an accommodating portion 2311, a pushing portion 2312, and a connecting portion 2313. Along the arrangement direction of the two friction pads 22, the accommodating portion 2311 and the pushing portion 2312 are respectively arranged on two sides of two brake discs 1002. Along an arrangement direction perpendicular to the two friction pads 22, the connecting portion 2313 is located on a same side of the accommodating portion 2311 and the pushing portion 2312, and the connecting portion 2313 is fastened to the accommodating portion 2311 and the pushing portion 2312 separately.

In other words, in the examples in FIG. 6 to FIG. 8, along the arrangement direction of the two friction pads 22, the accommodating portion 2311 and the pushing portion 2312 are arranged at intervals, the accommodating portion 2311 is located on a side that is of the first friction pad 22a and that is away from the second friction pad 22b, and the pushing portion 2312 is located on a side that is of the second friction pad 22b and that is away from the first friction pad 22a. The connecting portion 2313 is fastened between the accommodating portion 2311 and the pushing portion 2312, and is located on a same side that is of the accommodating portion 2311 and the pushing portion 2312 and that is away from the brake disc 1002.

It may be understood that the connecting portion 2313 is disposed to bridge between the accommodating portion 2311 and the pushing portion 2312, to fasten a distance between the accommodating portion 2311 and the pushing portion 2312, and provide a sliding clearance for the two friction pads 22 to displace towards the brake disc 1002.

In an embodiment, a spacing distance H between the accommodating portion 2311 and the pushing portion 2312 is greater than a sum W of thickness dimensions of the two friction pads 22 and a thickness dimension of the brake disc 1002.

For example, as shown in FIG. 6 to FIG. 8, the spacing distance H between the accommodating portion 2311 and the pushing portion 2312 may be understood as, along the arrangement direction of the two friction pads 22, a spacing distance between a side surface that is of the accommodating portion 2311 and that faces the pushing portion 2312 and a side surface that is of the pushing portion 2312 and that faces the accommodating portion 2311.

The sum W of the thickness dimensions of the two friction pads 22 and the thickness dimension of the brake disc 1002 may be understood as, along the arrangement direction of the two friction pads 22, a sum of a distance between two end faces that are of the first friction pad 22a and that face away from each other, a distance between two end faces that are of the second friction pad 22b and that face away from each other, and a distance between the two end faces that are of the brake disc 1002 and that face away from each other. The sum W may also be understood as, along the arrangement direction of the two friction pads 22, a spacing distance that is obtained when the two friction pads 22 are close to each other and are in contact with the two opposite end faces of the brake disc 1002 and that is between an end face that is of the first friction pad 22a and that is away from the second friction pad 22b and an end face that is of the second friction pad 22b and that is away from the first friction pad 22a, that is, a spacing distance between the two end faces that are of the two friction pads 22 and that are away from each other.

The spacing distance H between the accommodating portion 2311 and the pushing portion 2312 is set to be greater than the sum W of the thickness dimensions of the two friction pads 22 and the thickness dimension of the brake disc 1002, so that when the electro-mechanical brake apparatus 100 is in a non-braking state, the two friction pads 22 are far away from each other and can reserve enough rotation space for the brake disc 1002 to rotate around the axis of the brake disc 1002, thereby ensuring normal traveling of the vehicle 1000.

In an embodiment, the body 231 of the caliper body 23 is provided with two sliding connection holes 2316. The two sliding connection holes 2316 are configured to be slidably connected to a sliding pin on the caliper frame 24, so that the caliper body 23 is slidably connected to the vehicle frame via the caliper frame 24. Along a radial direction of the end cover 232, the two sliding connection holes 2316 are respectively arranged on two sides of the end cover 232.

FIG. 9 is a diagram of a cross-sectional structure of a partial structure of the electro-mechanical brake apparatus 100 according to an embodiment of this application. The transmission assembly 21 is accommodated in the accommodating portion 2311 of the body 231, the friction pad 22 that is of the two friction pads 22 and that is close to the transmission assembly 21 is slidably connected to the accommodating portion 2311, and the friction pad 22 that is of the two friction pads 22 and that is away from the transmission assembly 21 is fastened to the pushing portion 2312.

In the example in FIG. 9, the first friction pad 22a is slidably connected to the accommodating portion 2311, and the second friction pad 22b is fastened to the pushing portion 2312. In addition, along the arrangement direction of the two friction pads 22, the first friction pad 22a is located on a side that is of the accommodating portion 2311 and that faces the brake disc 1002. When the actuator 10 drives the transmission assembly 21 to act, the transmission assembly 21 pushes the first friction pad 22a to slide, relative to the accommodating portion 2311, in a direction close to the brake disc 1002.

For example, the accommodating portion 2311 is provided with the accommodating cavity 2314, a position of the accommodating cavity 2314 is disposed corresponding to a position of the transmission assembly 21, and the accommodating cavity 2314 penetrates the accommodating portion 2311 along the arrangement direction of the two friction pads 22. The transmission assembly 21 is located in the accommodating cavity 2314, and may form displacement along the arrangement direction of the two friction pads 22 to push the adjacent friction pads 22 (illustrated as the first friction pad 22a in FIG. 6).

In other words, the accommodating cavity 2314 is sleeved on a periphery of the transmission assembly 21, and an axis of the accommodating cavity 2314 is parallel to the arrangement direction of the two friction pads 22. It may also be understood that the accommodating cavity 2314 extends along the rotation axis of the brake disc 1002. Along the arrangement direction of the two friction pads 22, the accommodating cavity 2314 has two opposite openings. In FIG. 9, an example in which the two openings are respectively a power input opening 2314a and a power output opening 2314b is used for description.

The power input opening 2314a is located on a side that is of the accommodating cavity 2314 and that is close to the actuator 10, so that the actuator 10 transmits the driving force from the power input opening 2314a to the transmission assembly 21 accommodated in the accommodating cavity 2314. The power output opening 2314b is located on a side that is of the accommodating cavity 2314 and that is close to the friction pad 22, so that the transmission assembly 21 outputs, from the power output opening 2314b, the power to the friction pad 22 (illustrated as the first friction pad 22a in FIG. 9) adjacent to the power output opening 2314b, and drives the friction pad 22 to slide towards the brake disc 1002 to brake the brake disc 1002.

It may also be understood that, in the illustration of FIG. 9, the transmission assembly 21 extends into the caliper body 23 from one side (that is, the power output opening 2314b) that is of the accommodating cavity 2314 and that is away from the friction pad 22, and extends out from the other side (that is, the power output opening 2314b) of the accommodating cavity 2314, to push the friction pad 22.

It may be understood that, because the transmission assembly 21 outputs the power from the power output opening 2314b in the accommodating cavity 2314 and drives the friction pad 22 to slide along the rotation axis of the brake disc 1002, the accommodating cavity 2314 is disposed to extend along the rotation axis of the brake disc 1002, so that a structure shape of the accommodating cavity 2314 can adapt to a structure feature and a motion requirement of the transmission assembly 21. Further, when the accommodating cavity 2314 accommodates the transmission assembly 21, the motion requirement of the transmission assembly 21 can also be met to output the power and brake the vehicle 1000.

The accommodating cavity 2314 is disposed to accommodate the transmission assembly 21, and this can protect the transmission assembly 21, to prevent impurities such as external water vapor, dust, and foreign matter from eroding a functional mechanical member in the transmission assembly 21, thereby ensuring transmission efficiency and a working life of the transmission assembly 21.

In addition, the accommodating cavity 2314 is disposed to penetrate the accommodating portion 2311 along the arrangement direction of the two friction pads 22, so that the transmission assembly 21 can be installed from a side that is of the body 231 and that is away from the pushing portion 2312. Therefore, there is no need to reserve an assembly avoidance position for the transmission assembly 21 on a side that is of the body 231 and that is close to the pushing portion 2312. This reduces assembly difficulty of the transmission assembly 21 and improves assembly precision of the transmission assembly 21.

In an embodiment, the transmission assembly 21 includes a screw 211 and a screw sleeve 212 that engage with each other, the screw 211 is in a transmission connection between the actuator 10 and the screw sleeve 212, and the screw sleeve 212 engages with the screw 211 and moves towards the brake disc 1002 with rotation of the screw 211 to push the friction pad 22.

In the illustration of FIG. 9, the screw 211 and the screw sleeve 212 are located on a same side of the friction pad 22 along the rotation axis of the brake disc 1002. The screw sleeve 212 is coaxially sleeved on a periphery of the screw 211, and the screw sleeve 212 engages with the screw 211. The screw 211 is configured to receive the driving force input by the actuator 10, and rotate around an axis of the screw 211. The screw 211 rotates around the axis of the screw 211, to drive the screw sleeve 212 to slide, and the screw sleeve 212 slides and pushes the friction pad 22 (illustrated as the first friction pad 22a in FIG. 9) adjacent to the screw sleeve 212 to slide towards the brake disc 1002 along a direction parallel to the rotation axis of the screw 211.

It may be understood that the screw sleeve 212 may be constructed as a ring shape and sleeved on the periphery of the screw 211, to facilitate engagement between the screw sleeve 212 and the screw 211 and simplify a structure of the screw sleeve 212 to facilitate processing. Through cooperative action of the screw 211 and the screw sleeve 212, the rotation driving force input by the actuator 10 can be converted into displacement thrust along the axial direction of the brake disc 1002, to push the friction pads 22 and the brake disc 1002 to generate the friction force to brake the brake disc 1002. Further, the wheel 1001 is indirectly braked, and the vehicle 1000 can be braked.

In addition, the transmission assembly 21 is disposed to implement transmission by engaging the screw 211 and the screw sleeve 212, so that transmission stability and the transmission efficiency of the transmission assembly 21 can be improved, and braking effect of the electro-mechanical brake apparatus 100 can be further improved.

In an embodiment, the transmission assembly 21 includes a piston 213. Along a direction perpendicular to the arrangement direction of the two friction pads 22, the piston 213 surrounds the periphery of the screw 211 along the direction perpendicular to the arrangement direction of the two friction pads 22. The piston 213 is located between the screw sleeve 212 and the friction pad 22, and the screw sleeve 212 pushes, via the piston 213, the friction pads 22 to slide towards the brake disc 1002. That is, the piston 213 and the screw sleeve 212 are coaxially fixed and located on a side that is of the screw sleeve 212 and that faces at least one friction pad 22, and an end face that is of the piston 213 and that is away from the screw sleeve 212 is configured to abut against one friction pad 22.

For example, as shown in FIG. 9, along the arrangement direction of the two friction pads 22, both the screw sleeve 212 and the piston 213 are sleeved on the periphery of the screw 211, and along the rotation axis of the screw 211, the screw sleeve 212 is located on a side that is of the piston 213 and that is away from the friction pad 22. It may also be understood that the piston 213 is located between the screw sleeve 212 and the friction pad 22. The screw sleeve 212 is engaged with the screw 211, and is fastened to the piston 213.

The screw 211 rotates around the axis of the screw 211 and drives the screw sleeve 212 to slide, and the screw sleeve 212 slides along the rotation axis of the screw 211. Because the piston 213 is fastened to the screw sleeve 212, when the screw 211 drives the screw sleeve 212 to slide, the screw sleeve 212 synchronously drives the piston 213 to slide along the rotation axis of the screw 211.

In the example in FIG. 9, the screw 211 rotates and drives the screw sleeve 212 to slide along the rotation axis of the screw 211 in a direction facing the friction pad 22. Because the piston 213 is located between the screw sleeve 212 and the friction pad 22 and is fastened to the screw sleeve 212, when the screw sleeve 212 drives the piston 213 to slide in a direction close to the friction pad 22, along the rotation axis of the screw 211, an end face that is of the piston 213 and that is away from the screw sleeve 212 is first in contact with and abuts against the friction pad 22, to push the friction pad 22 to slide.

It may be understood that the end face that is of the piston 213 and that faces the friction pad 22 is disposed to abut against the friction pad 22, and thrust is generated to push the friction pad 22 to slide, so that a contact area between the transmission assembly 21 and the friction pad 22 can be increased. This further improves pushing stability and efficiency of pushing the friction pad 22. In other words, a contact surface with a larger area may be disposed on the piston 213 in correspondence with the friction pad 22, to ensure that the thrust generated by the screw sleeve 212 is transferred to the friction pad 22 more smoothly.

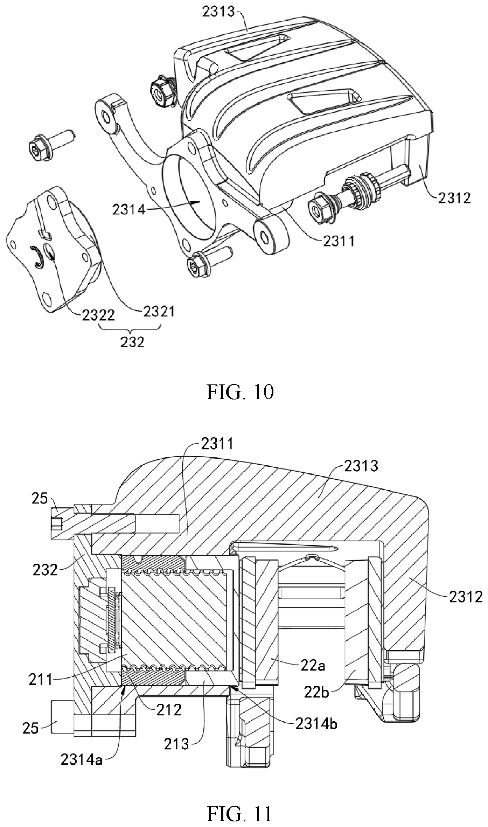

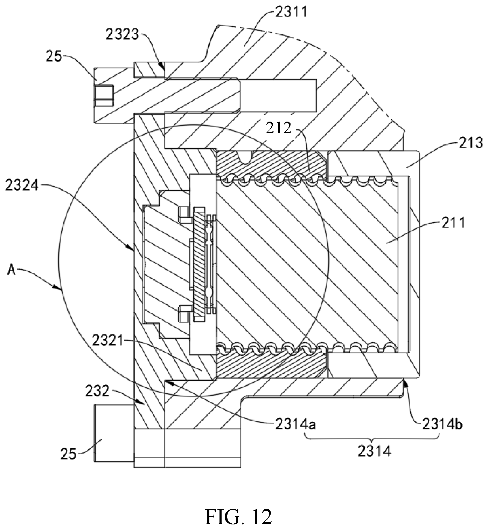

Refer to FIG. 10 to FIG. 12. FIG. 10 is a diagram of an exploded structure of the caliper body 23 in the electro-mechanical brake apparatus 100 according to an embodiment of this application, FIG. 11 is a diagram of a cross-sectional structure of a partial structure of the electro-mechanical brake apparatus 100 according to an embodiment of this application, and FIG. 12 is a diagram of a cross-sectional structure of a partial structure of the electro-mechanical brake apparatus 100 according to an embodiment of this application. As shown in FIG. 10 to FIG. 12, the end cover 232 is fastened to a side that is of the accommodating portion 2311 and that is away from the pushing portion 2312, and is configured to shield an end portion that is of the accommodating cavity 2314 and that is close to the actuator 10. The screw 211 may pass through the end cover 232 and be in a transmission connection to the actuator 10 to receive the driving force. In other words, along the arrangement direction of the two friction pads 22, the power input opening 2314a of the accommodating cavity 2314 faces the actuator 10, and the end cover 232 is configured to shield the power input opening 2314a.

It may be understood that the end cover 232 is disposed to be fastened to the accommodating portion 2311 and is configured to shield the power input opening 2314a, so that the end cover 232 can seal the accommodating cavity 2314 from the power input opening 2314a. This further protects the transmission assembly 21 accommodated in the accommodating cavity 2314, and prevents transmission performance of the transmission assembly 21 from being affected by the external water vapor, the dust, or another impurity entering the accommodating cavity 2314 from the power input opening 2314a.

In an embodiment, the end cover 232 is provided with the through hole 2322 extending along the arrangement direction of the two friction pads 22, and the transmission assembly 21 and the actuator 10 pass through the through hole 2322 and are in a transmission connection.

In an embodiment, the end cover 232 includes the extend-in section 2321. The extend-in section 2321 is located in the accommodating portion 2311, and an end face that is of the extend-in section 2321 and that faces the pushing portion 2312 is configured to limit the sliding distance that is of the transmission assembly 21 in the accommodating cavity 2314 and that faces the end cover 232.

For example, the extend-in section 2321 extends towards the pushing portion 2312 along the arrangement direction of the two friction pads 22, and extends into the accommodating portion 2311 from the power input opening 2314a, to enable the extend-in section 2321 to be located in the accommodating portion 2311. The extend-in section 2321 and the transmission assembly 21 are sequentially arranged along the arrangement direction of the two friction pads 22. When the screw 211 rotates reversely to drive the screw sleeve 212 to slide in a direction away from the brake disc 1002, an end face that is of the extend-in section 2321 of the end cover 232 and that faces the screw sleeve 212 is in contact with and abuts against the screw sleeve 212.

Because the end cover 232 is fastened to the accommodating portion 2311, when the screw 211 drives the screw sleeve 212 to slide towards the end cover 232, and is in contact with and abuts against the extend-in section 2321, the extend-in section 2321 limits sliding of the screw sleeve 212 facing the end cover 232, thereby limiting the sliding distance that is of the transmission assembly 21 in the accommodating cavity 2314 and that faces the end cover 232.

It may be understood that, along the arrangement direction of the two friction pads 22, when the screw sleeve 212 slides to be in contact with and abut against the end face that is of the end cover 232 and that faces the pushing portion 2312, the end cover 232 limits a sliding distance of the screw sleeve 212 facing the screw 211, to avoid generating a friction pre-tightening force between the screw sleeve 212 and the screw 211 under action of an inertia force, thereby protecting the screw 211 and the screw sleeve 212, and improving a response speed of the electro-mechanical brake apparatus 100 during a next time of braking.

In addition, when the end cover 232 is configured to limit the sliding distance of the transmission assembly 21 facing the end cover 232, the end cover 232 is further configured to bear the reverse thrust of pushing the friction pad 22 by the transmission assembly 21.

Specifically, when the actuator 10 inputs the power to the transmission assembly 21 from the power input opening 2314a, and drives the screw 211 of the transmission assembly 21 to rotate around the axis of the screw 211, the screw 211 rotates and drives the screw sleeve 212 to slide along the arrangement direction of the two friction pads 22, to drive one friction pad 22 (illustrated as the first friction pad 22a in FIG. 11) adjacent to the screw sleeve 212 to slide in a direction towards the brake disc 1002. After the transmission assembly 21 drives the first friction pad 22a to be in contact with and abut against the brake disc 1002, the brake disc 1002 transfers the reverse thrust to the transmission assembly 21 via the first friction pad 22a.

The transmission assembly 21 is further configured to reversely push the end cover 232, to drive the body 231 of the caliper body 23 to drive the remote friction pad 22 to slide towards the brake disc 1002. In other words, along the arrangement direction of the two friction pads 22, the transmission assembly 21 pushes the end cover 232 in the direction away from the brake disc 1002. The end cover 232 bears the reverse thrust of pushing the friction pad 22 by the transmission assembly 21, and drives the second friction pad 22b fastened to the pushing portion 2312 to slide in the direction towards the brake disc 1002. In this way, the actuator 10 drives the two friction pads 22 to be close to each other to brake the brake disc 1002.

In other words, the transmission assembly 21 may push the relatively close friction pad 22 to slide in the caliper body 23, and push the body 231 of the caliper body 23 via the end cover 232 to drive the relatively distant friction pad 22 to slide, to drive the two friction pads 22 to be relatively close to each other.

It may be understood that the end cover 232 is cooperatively installed on a side that is away from the pushing portion 2312, and functions of limiting, by the accommodating portion 2311 via the end cover 232, the sliding distance of the transmission assembly 21 facing the end cover 232 and bearing the reverse thrust of pushing the friction pad 22 by the transmission assembly 21 are implemented. In other words, a structure that corresponds to the accommodating portion 2311 of the body 231 and that is configured to shield the accommodating cavity 2314 is separately disposed as the end cover 232, so that the accommodating cavity 2314 can be disposed as a through-hole structure that penetrates along the arrangement direction of the two friction pads 22, thereby reducing processing difficulty of the accommodating cavity 2314, and improving processing precision of the accommodating cavity 2314.

In an embodiment, an outer circumferential surface of the extend-in section 2321 is attached to an inner circumferential surface of the accommodating cavity 2314 along a direction perpendicular to the rotation axis of the screw 211.

The extend-in section 2321 is disposed in the accommodating cavity 2314, so that the extend-in section 2321 can be used to assist reliable radial positioning between the end cover 232 and the body 231. The outer circumferential surface of the extend-in section 2321 is disposed to be attached to the inner circumferential surface of the accommodating cavity 2314, to increase a contact surface between the end cover 232 and the body 231, thereby improving sealing effect.

Usually, as a main force-bearing component of the electro-mechanical brake apparatus, the caliper body needs to be used to fasten the brake motor and a mechanical transmission mechanism, and further needs to be connected to the brake friction pad. A structure of the caliper body is complex, and a precision requirement is high. As a result, processing is difficult, and costs are high.

In this application, in the electro-mechanical brake apparatus 100, the caliper body 23 is split into two parts: the body 231 and the end cover 232, and the structure of the caliper body 23 is formed through combination and assembly. An assembly direction of the end cover 232 and the body 231 is parallel to the sliding direction of the friction pad 22. The accommodating cavity 2314 configured to accommodate the transmission assembly 21 may be processed from a side of the end cover 232 of the body 231. This helps reduce processing difficulty of the body 231 and improve processing precision.

In addition, the transmission assembly 21 may be installed from a side that is of the body 231 and that is away from the friction pad 22, and there is no need to reserve the assembly avoidance position for the transmission assembly 21 on a side that is of the body 231 and that is close to the friction pad 22, thereby facilitating assembly of the body 231. Overall rigid strength of the caliper body 23 can also be ensured by configuring a connecting member of the end cover 232. On one side of the pushing portion 2312 of the body 231, because there is no need to reserve a structure of the assembly avoidance position, a contact area between the pushing portion 2312 and the friction pad 22 may be properly increased, thereby improving the overall rigid strength of the caliper body 23 and ensuring a reliable connection and the friction pad 22.

The vehicle 1000 in this application is braked via the electro-mechanical brake apparatus 100 according to embodiments of this application. Because in the electro-mechanical brake apparatus 100 according to embodiments of this application, the caliper body 23 is split into a structure combining the end cover 232 and the body 231, the structure of the caliper body 23 is simplified to facilitate processing, and costs of the vehicle 1000 in this application are also correspondingly reduced while braking effect is ensured. In other words, because the vehicle 1000 in this application is equipped with the electro-mechanical brake apparatus 100 according to embodiments of this application, the vehicle 1000 in this application has all possible beneficial effect of the electro-mechanical brake apparatus 100 in this application.

In an embodiment, the end cover 232 is fastened to the body 231 of the caliper body 23 via a bolt 25, and a length direction of the bolt 25 is parallel to the arrangement direction of the two friction pads 22. The length direction of the bolt 25 is set to be parallel to a displacement direction of the friction pad 22, so that a force borne by the bolt 25 in a braking process of the caliper body 23 is a pulling force. A force applied on the bolt 25 meets requirement, thereby improving the overall rigid strength of the caliper body 23.

In an embodiment, there are two bolts 25, and the two bolts 25 are symmetrically distributed at two opposite ends of the end cover 232 along the arrangement direction perpendicular to the two friction pads 22, to ensure that the end cover 232 bears even force in a process of rotating with the entire electro-mechanical brake apparatus 100. Force-bearing effect and overall structural stability of the electro-mechanical brake apparatus 100 are further improved.

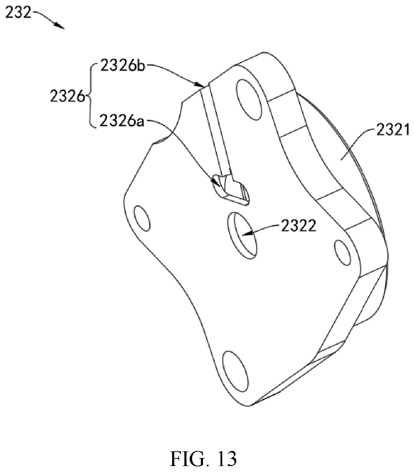

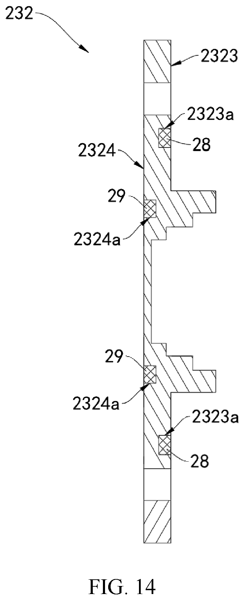

Refer to FIG. 13 and FIG. 14 with reference to FIG. 12. FIG. 13 is a diagram of an outline structure of the end cover 232 of the caliper body 23 in the electro-mechanical brake apparatus 100 according to an embodiment of this application, and FIG. 14 is a diagram of a cross-sectional structure of the end cover 232 of the caliper body 23 in the electro-mechanical brake apparatus 100 according to an embodiment of this application. As shown in FIG. 12 to FIG. 14, along the arrangement direction of the two friction pads 22, the end cover 232 has two opposite mounting faces, which are respectively illustrated as the first mounting face 2323 and the second mounting face 2324 in this specification of this application. The first mounting face 2323 is located on a side that is of the end cover 232 and that faces the body 231 of the caliper body 23, and is attached to the body 231. The second mounting face 2324 is located on a side that is of the end cover 232 and that faces a housing 11 of the actuator 10, and is attached to the housing 11 of the actuator 10 (as shown in FIG. 6).

In an embodiment, the first recess 2323a and the first sealing member 28 that cooperate with each other are disposed between the first mounting face 2323 and the body 231 of the caliper body 23, and the first sealing member 28 is embedded into the first recess 2323a to implement sealing between the end cover 232 and the body 231 of the caliper body 23.

For example, in this specification of this application, an example in which the first mounting face 2323 is provided with the first recess 2323a is used for description, and FIG. 14 illustrates that a first recess is the first recess 2323a. Specifically, the first mounting face 2323 is provided with the first recess 2323a, and the first recess 2323a extends along a plane direction of the first mounting face 2323. The first sealing member 28 is embedded into the first recess 2323a. Sealing protection inside the caliper body 23 can be implemented by disposing the first mounting face 2323 of the end cover 232 to be connected to the body 231 in a sealed manner.

In an embodiment, the second recess 2324a and the second sealing member 29 that cooperate with each other are disposed between the second mounting face 2324 and the housing 11 of the actuator 10, and the second sealing member 29 is embedded into the second recess 2324a to implement sealing between the end cover 232 and the housing 11 of the actuator 10.

For example, in this specification of this application, an example in which the second mounting face 2324 is provided with the second recess 2324a is used for description, and FIG. 14 illustrates that a second recess is the second recess 2324a. Specifically, the second mounting face 2324 is provided with the second recess 2324a, and the second recess 2324a extends along a plane direction of the second mounting face 2324. The second sealing member 29 is embedded into the second recess 2324a. Sealing protection between the caliper body 23 and the actuator 10 can be implemented by disposing the second mounting face 2324 of the end cover 232 to be connected to the housing 11 of the actuator 10 in a sealed manner.

In an embodiment, both the first recess 2323a and the second recess 2324a are constructed as closed ring structures, to respectively improve sealing protection effect of the first sealing member 28 and sealing protection effect of the second sealing member 29.

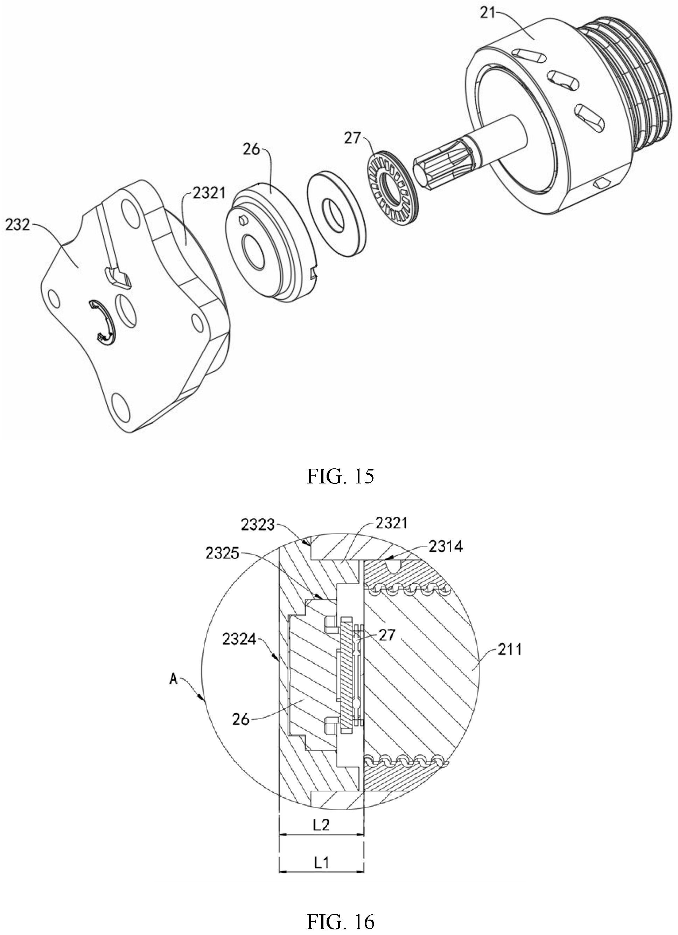

Refer to FIG. 15 and FIG. 16. FIG. 15 is a diagram of an exploded structure of a partial structure of the electro-mechanical brake apparatus 100 according to an embodiment of this application, and FIG. 16 is a diagram of a partial cross-sectional structure of the electro-mechanical brake apparatus 100 at a position A according to the embodiment shown in FIG. 12 of this application. As shown in FIG. 15 and FIG. 16, the brake 20 includes the pressure sensor 26, and the pressure sensor 26 is configured to detect the pressure applied to the end cover 232 by the transmission assembly 21. The actuator 10 is configured to receive a pressure signal obtained through monitoring and detection by the pressure sensor 26, to adjust output torque.

Specifically, along the arrangement direction of the two friction pads 22, the pressure sensor 26 is located between the transmission assembly 21 and the end cover 232. The surface that is of the end cover 232 and that faces the accommodating cavity 2314 is provided with the step hole 2325 for accommodating and fastening the pressure sensor 26.

It may be understood that the pressure sensor 26 is disposed on a side that is of the transmission assembly 21 and that is close to the end cover 232, and the pressure sensor 26 is accommodated and fastened via the step hole 2325 in the end cover 232. This simplifies an installation structure while implementing pressure detection, and properly utilizes internal space of the caliper body 23.

In an embodiment, the brake 20 includes a thrust bearing 27. The thrust bearing 27 is located between the transmission assembly 21 and the pressure sensor 26 along the arrangement direction of the two friction pads 22. The thrust bearing 27 is configured to reduce a friction force during relative motion between the transmission assembly 21 and the pressure sensor 26.

In an embodiment, along the arrangement direction of the two friction pads 22, a distance L1 between the second mounting face 2324 and an end face that is of the thrust bearing 27 and that is away from the end cover 232 is greater than a distance L2 between the second mounting face 2324 and an end face that is of the extend-in section 2321 and that is away from the end cover 232. It may be understood that a surface that is of the thrust bearing 27 and that faces the transmission assembly 21 is disposed to protrude from a surface that is of the end cover 232 and that faces the transmission assembly 21, to ensure that the transmission assembly 21 reliably abuts against the thrust bearing 27, thereby reducing a friction loss between the transmission assembly 21 and the pressure sensor 26 via the thrust bearing 27.

Return to FIG. 13. In the illustration of FIG. 13, the third recess is disposed between the second mounting face 2324 and the housing 11 of the actuator 10, and the third recess is configured to avoid the transmission line that is of the pressure sensor 26 and that is electrically connected to the actuator 10. In this specification of this application, an example in which the second mounting face 2324 is provided with the third recess is used for description, and FIG. 13 illustrates that a third recess is the third recess 2326.

Specifically, the third recess 2326 extends along the direction perpendicular to the arrangement direction of the two friction pads 22, and extends along a direction parallel to the second mounting face 2324. The third recess 2326 includes a cable inlet end 2326a and a cable outlet end 2326b that are opposite to each other. Along the extension direction of the third recess 2326, the cable inlet end 2326a is located on a side that is of the third recess 2326 and that is close to the through hole 2322 of the end cover 232, and the cable outlet end 2326b is located on a side that is of the third recess 2326 and that is away from the through hole 2322.

As shown in FIG. 13, the cable inlet end 2326a is connected to the inside of the housing 11 of the actuator 10. When the signal transmission line is led out from a side that is of the pressure sensor 51 and that is away from the transmission assembly 21, the signal transmission line can extend out of the end cover 232 from the cable inlet end 2326a of the third recess 2326 and extend into the third recess 2326.

The cable outlet end 2326b is located at an edge of the second mounting face 2324, and the signal transmission line extending into the third recess 2326 extends out of the second mounting face 2324 from the cable outlet end 2326b.

It may be understood that the pressure sensor 26 is led out from the mounting face between the housing 11 of the actuator 10 and the end cover 232, so that a tracing length of the transmission line inside the electro-mechanical brake apparatus 100 can be shortened, and an overall volume of the electro-mechanical brake apparatus 100 can be compressed.

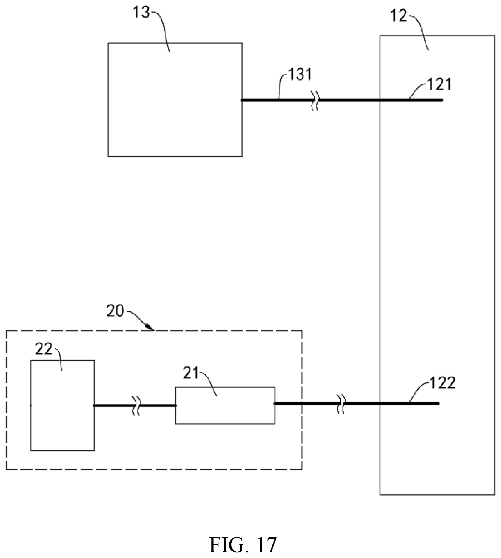

FIG. 17 is a schematic arrangement diagram of an internal structure of the electro-mechanical brake apparatus 100 according to an embodiment of this application. As shown in FIG. 17, the actuator 10 includes the reducer 12 and the brake motor 13, the reducer 12 is in a transmission connection between the brake 20 and the brake motor 13, and the brake motor 13 is configured to drive the reducer 12 to rotate to provide the driving force for the transmission assembly 21.

For example, along the arrangement direction of the two friction pads 22, the reducer 12 is located on a side that is of the transmission assembly 21 and that is away from the at least one friction pad 22, and the reducer 12 passes through the end cover 232 and is in a transmission connection to the transmission assembly 21. In other words, as shown in FIG. 17, along the arrangement direction of the two friction pads 22, the reducer 12 is located on a side that is of the transmission assembly 21 and that is away from the brake disc 1002, and the brake motor 13 rotates via the reducer 12 to drive the transmission assembly 21 to act and brake the wheel 1001, which may also be understood as braking the brake disc 1002.

Along the arrangement direction of the two friction pads 22, the brake motor 13 and the transmission assembly 21 are located on a same side of the reducer 12, that is, the brake motor 13 is located on a side that is of the reducer 12 and that faces the transmission assembly 21. In addition, along the direction perpendicular to the arrangement direction of the two friction pads 22, the brake motor 13 and the transmission assembly 21 are disposed adjacent to each other side by side, so that the transmission assembly 21 can be driven by the reducer 12 to drive the screw sleeve 212 of the transmission assembly 21 to form displacement along a rotation axis direction of the transmission assembly 21, and push the friction pads 22 to slide towards the brake disc 1002 to brake the wheel 1001.

In an embodiment, the body 231 includes a recess 2317, and the recess 2317 is configured to accommodate the brake motor 13. Along the axial direction of the brake motor 13, a recess direction of the recess 2317 is away from the reducer 12. Along the radial direction of the brake motor 13, the recess direction of the recess 2317 faces the transmission assembly 21.

In an embodiment, the body 231 includes the two sliding connection holes 2316, and the two sliding connection holes 2316 are configured to slidably connect to the caliper frame 24. Along the radial direction of the brake motor 13, the two sliding connection holes 2316 are respectively arranged on the two sides of the end cover 232. Along an arrangement direction of the two sliding connection holes 2316, projection of the brake motor 13 covers projection of the two sliding connection holes 2316.

In an embodiment, the body 231 includes two fixed connection holes 2315, and the two fixed connection holes 2315 are configured to fasten the end cover 232 to the reducer 12. Along the radial direction of the brake motor 13, the two fixed connection holes 2315 are respectively arranged on the two sides of the end cover 232. Along an arrangement direction of the two sliding connection holes 2316, projection of the brake motor 13 covers projection of the two sliding connection holes 2316.

Refer to FIG. 8. The body 231 of the caliper body 23 is provided with the two fixed connection holes 2315. The two fixed connection holes 2315 are configured to be fastened to the reducer 12, to implement a fixed connection between the reducer 12 and the caliper body 23. Along the radial direction of the end cover 232, the two fixed connection holes 2315 are respectively arranged on the two sides of the end cover 232.

Refer to FIG. 8. The body 231 of the caliper body 23 is provided with the two sliding connection holes 2316. The arrangement direction of the two sliding connection holes 2316 intersects an arrangement direction of the two fixed connection holes 2315. In an embodiment, the arrangement direction of the two sliding connection holes 2316 is perpendicular to the arrangement direction of the two fixed connection holes 2315. The caliper body 23 is arranged in different directions relative to the sliding connection hole 2316 of the vehicle frame and the fixed connection hole 2315 of the caliper body 23 for fastening the reducer 12, to separately facilitate assembly and connection of the caliper body 23 and the vehicle frame and assembly and connection of the caliper body 23 and the reducer 12.

As shown in FIG. 17, the body 231 of the caliper body 23 is further provided with the recess 2317, and the recess 2317 is further configured to accommodate the brake motor 13. Along the axial direction of the brake motor 13, the recess direction of the recess 2317 is away from the reducer 12. Along the radial direction of the brake motor 13, the recess direction of the recess 2317 faces the transmission assembly 21.

A central axis of the recess is located between one sliding connection hole 2316 and an axis of the end cover 232, and is located between one fixed connection hole 2315 and the axis of the end cover 232. In this embodiment, the brake motor 13 is biased relative to the end cover 232, so that the overall volume of the electro-mechanical brake apparatus 100 can be compressed, and wheel space can be saved.

In an embodiment, an output shaft 122 of the reducer 12 is coaxially driven with the transmission assembly 21. The output shaft 122 of the reducer 12 is used as the transmission member of the reducer 12 and the transmission assembly 21. The output shaft 122 of the reducer 12 passes through the end cover 232. The through hole 2322 of the end cover 232 is used to avoid the output shaft 122 of the reducer 12.

As shown in FIG. 17, the reducer 12 includes an input shaft 121 and the output shaft 122 that are in a transmission connection. The input shaft 121 is coaxially driven with a motor shaft 131 of the brake motor 13, and the output shaft 122 is coaxially driven with the transmission assembly 21. The reducer 12 is disposed adjacent to the transmission assembly 21 and is in the transmission connection to the transmission assembly 21, so that a power transmission path from the brake motor 13 to the transmission assembly 21 can be shortened, the transmission efficiency can be improved, and the volume can be reduced.

In an embodiment, along the direction perpendicular to the arrangement direction of the two friction pads 22, the input shaft 121 and the output shaft 122 are disposed side by side, and axial directions of the input shaft 121 and the output shaft 122 are both parallel to an axial direction of the transmission assembly 21. The input shaft 121 and the output shaft 122 of the reducer 12 are disposed side by side and are in the transmission connection, so that output power of the brake motor 13 can be reversed for transfer, and a length and a size of the electro-mechanical brake apparatus 100 can be compressed. In other words, the reducer 12 is arranged along arrangement directions of the brake motor 13 and the transmission assembly 21, and is arranged adjacent to the axial directions of the brake motor 13 and the transmission assembly 21. This further shortens the power transmission path from the brake motor 13 to the transmission assembly 21, improves the transmission efficiency, and reduces the volume.

In an embodiment, the output shaft 122 of the reducer 12 is coaxially driven with the screw 211 of the transmission assembly 21. The screw 211 is used as the transmission member of the reducer 12 and the transmission assembly 21. The screw 211 of the transmission assembly 21 is equivalent to the input shaft of the transmission assembly 21. The screw 211 passes through the end cover 232. The through hole 2322 of the end cover 232 is used to avoid the screw 211.

As a power source, the brake motor 13 rotates around the axis of the brake motor 13 via the motor shaft 131, to output the power to the outside. The motor shaft 131 of the brake motor 13 and the input shaft 121 of the reducer 12 are coaxially driven, and the motor shaft 131 rotates synchronously to drive the input shaft 121 to rotate, to input the power to the reducer 12. The power output by the brake motor 13 is input to the reducer 12 via the input shaft 121, and is output from the output shaft 122 to the reducer 12. The output shaft 122 is coaxially driven with the screw 211 of the transmission assembly 21. When the output shaft 122 rotates, the screw 211 is synchronously driven to rotate, to transmit the power to the screw sleeve 212 via the screw 211. The screw sleeve 212 pushes the friction pad 22 adjacent to the screw sleeve 212 to drive one friction pad 22 to slide towards the brake disc 1002, and drives the caliper body 23 to drive the other friction pad 22 to slide towards the brake disc 1002, thereby braking the vehicle 1000.

In other words, the transmission path of the power output by the brake motor 13 in the electro-mechanical brake apparatus 100 may be but is not limited to: the motor shaft 131 of the brake motor 13→the input shaft 121→the output shaft 122→the transmission assembly 21→the friction pad 22. This can further brake the vehicle 1000.

It may be understood that the power output by the brake motor 13 is transmitted to the transmission assembly 21 via the reducer 12, and the transmission assembly 21 drives the two friction pads 22 to slide to brake the brake disc 1002, so that the power output by the brake motor 13 is transmitted to the friction pads 22 via a "U"-shaped line. In other words, the power transmission path of the electro-mechanical brake apparatus 100 forms folding effect along an axial direction of the wheel 1001, thereby compressing the size of the electro-mechanical brake apparatus 100 along the axial direction of the wheel 1001, and properly utilizing the wheel space of the vehicle 1000.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus with a split-type caliper body, wherein the electro-mechanical brake apparatus comprises an actuator and a brake, the actuator comprises a brake motor and a reducer, the brake comprises a transmission assembly and the split-type caliper body, the brake motor is configured to drive the transmission assembly via the reducer, the transmission assembly is configured to drive a friction pad, the caliper body comprises a body and an end cover, and the end cover is detachably connected to the body, wherein
the body comprises an accommodating cavity, the accommodating cavity is configured to accommodate the transmission assembly, and the end cover is configured to shield the accommodating cavity; and
along an axial direction of the brake motor, a transmission member between the reducer and the transmission assembly passes through the end cover, and the brake motor, the end cover, and the transmission assembly are arranged on a same side of the reducer.

2. The electro-mechanical brake apparatus according to claim 1, wherein the end cover is provided with a through hole that penetrates along the axial direction of the brake motor, and the through hole is configured to avoid the transmission member between the reducer and the transmission assembly.

3. The electro-mechanical brake apparatus according to claim 1, wherein the end cover comprises an extend-in section; and
along the axial direction of the brake motor, the extend-in section is accommodated in the accommodating cavity, and an end face of the extend-in section is configured to limit a sliding distance that is of the transmission assembly in the accommodating cavity and that faces the end cover.

4. The electro-mechanical brake apparatus according to claim 1, wherein the brake comprises a pressure sensor, and the pressure sensor is configured to detect pressure applied to the end cover by the transmission assembly, wherein
along the axial direction of the brake motor, the pressure sensor is located between the transmission assembly and the end cover, and a surface that is of the end cover and that faces the accommodating cavity is provided with a step hole for accommodating and fastening the pressure sensor.

5. The electro-mechanical brake apparatus according to claim 4, wherein the end cover comprises a first mounting face and a second mounting face that face away from each other along the axial direction of the brake motor, wherein
the second mounting face faces the reducer, the second mounting face is provided with a third recess, the third recess is configured to avoid a signal transmission line of the pressure sensor, and the third recess extends along a radial direction of the brake motor.

6. The electro-mechanical brake apparatus according to claim 5, wherein the first mounting face comprises a first recess and a first sealing member, and the first sealing member is embedded into the first recess to implement sealing between the end cover and the body of the caliper body; or
a second recess and a second sealing member that cooperate with each other are disposed between the second mounting face and a housing of the actuator, and the second sealing member is embedded into the second recess to implement sealing between the end cover and the housing of the actuator.

7. The electro-mechanical brake apparatus according to any one of claims 1 to 6, wherein the body comprises a recess, and the recess is configured to accommodate the brake motor, wherein
along the axial direction of the brake motor, a recess direction of the recess is away from the reducer; and
along the radial direction of the brake motor, the recess direction of the recess faces the transmission assembly.

8. The electro-mechanical brake apparatus according to claim 6, wherein along the axial direction of the brake motor, the brake motor and the transmission assembly are arranged on the same side of the reducer.

9. The electro-mechanical brake apparatus according to claim 7, wherein the body comprises two sliding connection holes, and the two sliding connection holes are configured to slidably connect to a caliper frame, wherein
along the radial direction of the brake motor, the two sliding connection holes are respectively arranged on two sides of the end cover; and
along an arrangement direction of the two sliding connection holes, projection of the brake motor covers projection of the two sliding connection holes.

10. The electro-mechanical brake apparatus according to claim 9, wherein the body comprises two fixed connection holes, and the two fixed connection holes are configured to fasten the end cover to the reducer, wherein
along the radial direction of the brake motor, the two fixed connection holes are respectively arranged on the two sides of the end cover; and
along an arrangement direction of the two fixed connection holes, the projection of the brake motor does not cover projection of any one of the sliding connection holes.

11. An electro-mechanical brake apparatus, wherein the electro-mechanical brake apparatus comprises an actuator and a brake, the actuator comprises a brake motor and a reducer, the brake comprises a caliper body and a transmission assembly, the brake motor is configured to drive the transmission assembly via the reducer, the transmission assembly is configured to drive a friction pad, and a body of the caliper body comprises a recess configured to accommodate the brake motor, wherein
along an axial direction of the brake motor, a recess direction of the recess is away from the reducer; and
along a radial direction of the brake motor, the recess direction of the recess faces the transmission assembly.

12. The electro-mechanical brake apparatus according to claim 11, wherein the caliper body comprises an end cover and the body, the end cover is detachably connected to the body, the body comprises an accommodating cavity, the accommodating cavity is configured to accommodate the transmission assembly, and the end cover is configured to shield the accommodating cavity, wherein
along the axial direction of the brake motor, a transmission member between the reducer and the transmission assembly passes through the end cover, and the brake motor, the end cover, and the transmission assembly are arranged on a same side of the reducer.

13. The electro-mechanical brake apparatus according to claim 12, wherein the body comprises two sliding connection holes and two fixed connection holes, the two sliding connection holes are configured to slidably connect to a caliper frame, and the two fixed connection holes are configured to fasten the body to the end cover, wherein
along the radial direction of the brake motor, the two sliding connection holes are respectively arranged on two sides of the end cover, and the two fixed connection holes are respectively arranged on the two sides of the end cover; and
along an arrangement direction of the two sliding connection holes, projection of the brake motor covers projection of the two sliding connection holes.

14. The electro-mechanical brake apparatus according to claim 13, wherein an arrangement direction of the two fixed connection holes intersects the arrangement direction of the two sliding connection holes, wherein
along the arrangement direction of the two fixed connection holes, the projection of the brake motor does not cover projection of any one of the fixed connection holes.

15. A vehicle, wherein the vehicle comprises a wheel and the electro-mechanical brake apparatus according to any one of claims 1 to 14, and an axial direction of a brake motor is parallel to a rotation axis of the wheel.
